# EUROPEAN PATENT SPECIFICATION

(11) **EP 2 375 616 B1**
(45) Date of publication and mention of the grant of the patent: **01.04.2015**
(21) Application number: 11002989.9
(22) Date of filing: 08.04.2011
(51) Int. Cl.: H04L 5/00, H04B 7/02, H04B 7/04, H04W 72/04

(54) **Method for managing sounding reference signal transmission**
Verfahren zur Verwaltung der Übertragung von Referenzsignalen zur Kanalsondierung
Procédé de gestion de transmission du signaux de référence utilisé pour le sondage du canal de transmission

(30) Priority: 08.04.2010 US 322079 P
(43) Date of publication of application: 12.10.2011
(73) Proprietor: HTC Corporation, Taoyuan City 330 (TW)
(72) Inventor: Jen, Yu-Chih, Taoyuan City Taoyuan County 330 (TW)
(74) Representative: Wagner, Karl H.

(56) References cited:
- TEXAS INSTRUMENTS: "Increasing Sounding Capacity for LTE-A", 3GPP DRAFT; R1-100745, vol. RAN WG1, no. Valencia, Spain; 20100118, 18 January 2010 (2010-01-18), - 22 January 2010 (2010-01-22), XP050418383,
- ERICSSON ET AL: "Further Discussions on SRS Enhancements", 3GPP DRAFT; R1-100860, vol. RAN WG1, no. San Francisco, USA; 20100222, 22 February 2010 (2010-02-22), - 26 February 2010 (2010-02-26), XP050418466,
- HUAWEI: "Increasing SRS capacity to support UL MIMO", 3GPP DRAFT; R1-094707, no. Jeju; 20091109, 9 November 2009 (2009-11-09), XP050389107, FRANCE [retrieved on 2009-11-03]
- ZTE: "Multiplexing Capability of Uplink SRS in LTE-A", 3GPP DRAFT; R1-094743, no. Jeju; 20091109, 9 November 2009 (2009-11-09), XP050389140, FRANCE [retrieved on 2009-11-03]
- RINNE M ET AL: "A Performance Summary of the Evolved 3G (E-UTRA) for Voice Over Internet and Best Effort Traffic", IEEE TRANSACTIONS ON VEHICULAR TECHNOLOGY, vol. 58, no. 7, 1 September 2009 (2009-09-01), pages 3661-3673, XP011267387, NJ, US ISSN: 0018-9545, DOI: 10.1109/TVT.2009.2014457
- NOKIA SIEMENS NETWORKS ET AL: "Channel sounding enhancements for LTE-Advanced", 3GPP DRAFT; R1-094653, no. Jeju; 20091109, 9 November 2009 (2009-11-09), XP050389058, FRANCE [retrieved on 2009-11-02]
- ERICSSON ET AL: "On sounding reference signal enhancements", 3GPP DRAFT; R1-100056, vol. RAN WG1, no. Valencia, Spain; 20100118, 12 January 2010 (2010-01-12), XP050417803, FRANCE [retrieved on 2010-01-12]
- TEXAS INSTRUMENTS: "SRS for Carrier Aggregation in LTE-Advanced", 3GPP DRAFT; R1-100458, vol. RAN WG1, no. Valencia, Spain; 20100118, 18 January 2010 (2010-01-18), - 22 January 2010 (2010-01-22), XP050418100,

## Description

### Background of the Invention

### 1. Field of the Invention

The present invention relates to a method used in a wireless communication system and related communication device, and more particularly, to a method of handling sounding reference signal transmission enhancement in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

A sounding reference signal (SRS) is transmitted by the UE and received by the eNB in the LTE system. The main purpose of the SRS is used for a channel quality estimation so as to perform a frequency-selective scheduling among UEs on an uplink (UL). Therefore, a frequency band on which the UE transmits the SRS can be wider than those for transmitting data and control signals. Frequency bands for transmitting SRSs of the UEs shall be allowed to be overlapped such that the eNB can perform the frequency-selective scheduling among the UEs over the overlapped frequency bands. Moreover, the SRS can also be used for enhancing power control, modulation and coding scheme (MCS) selection, positioning and timing advance, obtaining an angle required for beamforming and performing an initial acquisition, especially when the UE is not scheduled for a period of time. In the LTE system, an SRS transmission can be periodic or aperiodic. In the periodic case, the eNB configures the UE to transmit the SRS periodically until the UE powers off or is reconfigured. In the aperiodic case, the UE transmits the SRS only when the eNB requests the SRS transmission from the UE. Besides, a power for the SRS transmission is usually limited to a certain value to avoid a nonlinear distortion of an amplifier in the UE when the UE boosts the power at a coverage edge of the eNB.

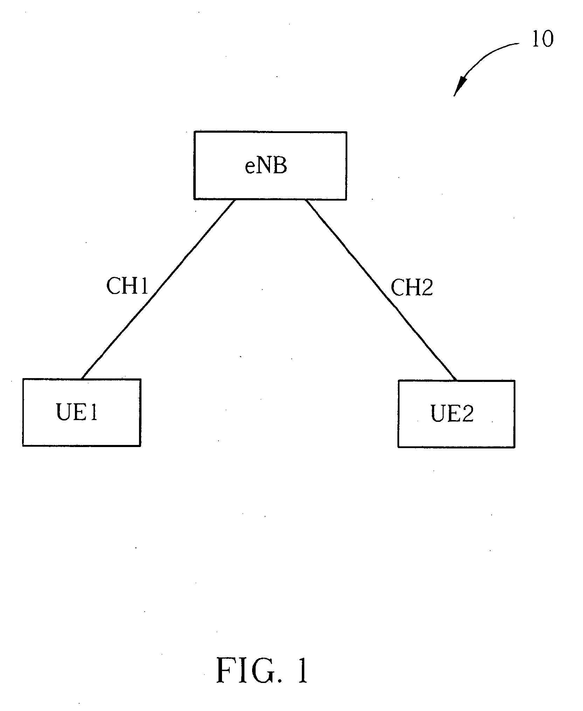

Please refer to Fig. 1, which is a schematic diagram of an examplary wireless communication system according to the prior art. UE1 and UE2 both transmit SRSs on a frequency band, which may comprises multiple resoruce blocks or subcarriers. Since locations and behaviors of the UE1 and the UE2 may not be the same, channels CH1 and CH2 experienced by the SRSs of the UE1 and UE2, respectively, are also different. The eNB estimates the received SRSs from the UE1 and the UE2, and obtain channel qualities of the channels CH1 and CH2. If the channel quality of the channel CH1 is better than the one of the channel CH2, the eNB configures more or all resources of the frequency band to the UE1. In constrast, if the channel quality of the channel CH2 is better than the one of the channel CH1, the eNB configures more or all resources of the frequency band to the UE2. Since the UE with a better channel quality is capable of using a higher level modulation and a lower rate coding, the system capacity is increased in terms of more data being transmitted and received. In short, the eNB configures more or all resoruces on the frequency band to the UE with a better channel quality. The capacity gain becomes larger when the frequency bands of more UEs corresponding to different channel qualities are scheduled by the eNB.

Please note that, SRSs are transmitted in a same frequency band in which an orthogonality and a low interference is achieved among the SRSs. Accordingly, the eNB performs the channel quality estimation with each of the received SRSs. In the LTE system, the orthogonality is achieved among the received SRSs by using an interleaved frequency-division multiple access (IFDMA), limiting the sounding bandwidth used by the UE, and transmitting the SRS with a specially designed sequence (e.g. a Zadoff-Chu sequence) corresponding to a cyclic time shift and a base sequence. The low interference is achieved by using an interference randomization where a sequence-group hopping among base sequences and a cyclic shift hopping are used.

On the other hand, another reference signal transmitted by the UE on the UL in the LTE system is a demodulation reference signal (DM RS). The eNB uses the DM RS for a channel estimation so as to perform a coherent demodulation on the data transmitted by the UE. Different from the SRS having a wide transmission bandwidth, the DM RS is transmitted in each slot of a subframe and is transmitted in the same resource blocks as a physical uplink control channel (PUCCH) or a physical uplink shared channel (PUSCH). Similar to the SRS, the IFDMA and the specially designed sequence (e.g. the Zadoff-Chu sequence) corresponding to the cyclic time shift and the base sequence are used to maintain the orthogonality between DM RSs of the UEs, and the sequence-group hopping among base sequences and the cyclic shift hopping are used for the interference randomization.

A long term evolution-advanced (LTE-A) system, as its name implies, is an evolution of the LTE system. The LTE-A system targets faster switching between power states, improves performance at the coverage edge of the eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports CA for both continuous and non-continuous component carriers with each component carrier limited to a maximum of 110 resource blocks. The CA increases a bandwidth flexibility by aggregating the non-continuous component carriers. A component carrier is either used as an UL component carrier or a downlink (DL) component carrier, but not both. Further, there is a one-to-one correspondence between the UL component carrier and the DL component carrier, i.e., each UL component carrier is paired with a corresponding DL component carrier.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure.

The CoMP is considered for different eNBs at geographically separated locations to coordinate the transmissions and receptions of the UE in the LTE-A system. When the UE is near a coverage edge of the eNB, the UE can receive signals from eNBs on the DL, and signals transmitted by the UE can also be received by the eNBs on the UL. Accordingly, the eNBs can cooperate to reduce the interference from signal transmissions not related to the UE (e.g. by scheduling or beamforming), and enhance signal reception of the UE (e.g. by transmitting the same data to the UE) on the DL. Further, the eNBs can combine the received signals from the UE to increase a quality of the received signals on the UL. Therefore, link performance such as data rate and throughput can be increased when the UE is near the coverage edge of the eNB.

The UL MIMO technique is used to achieve higher data rates, higher spectrum efficiency and improved system capacity by enabling parallel data streams to be exchanged between the eNB and the UE. In general, the UL MIMO technique should be implemented by using multiple transmitting and receiving antennas at both the UE and the eNB. However, even though the eNB can be equipped with the multiple transmitting and receiving antennas, most of the UEs are equipped with only one transmitting antenna and one receiving antenna due to a limited size. The advantage of the UL MIMO technique is thus limited. The UL multiuser MIMO (MU-MIMO) technique is used in the LTE-A system to solve this problem. With the UL MU-MIMO technique, the eNB schedules the UEs each with a transmitting antenna to transmit on the same frequency band by multiplexing data of the UEs. Advantages such as higher data rates, higher spectrum efficiency and improved system capacity can be realized.

Since the method for handling the SRS in the LTE system is designed for the UE and the network with only a single component carrier, the method cannot be directly applied to the LTE-A system with the CA, the CoMP and the UL MU-MIMO. Therefore, how to transmit the SRS on the component carriers with the CoMP and the UL MU-MIMO is a topic for discussion. Accordingly, parameters and protocols as well as respective signaling related to the transmission in the LTE system must be extended or modified for the LTE-A system.

With regard to the available prior art, attention is drawn to the following documents:
- TEXAS INSTRUMENTS: "Increasing Sounding Capacity for LTE-A", 3GPP DRAFT; R1-100745, TSG RAN WG1, Valencia, Spain; 18-22 January 2010, XP050418383
- ERICSSON ET AL: "Further Discussions on SRS Enhancements", 3GPP DRAFT; R1-100860, TSG RAN WG1, San Francisco, USA; 22-26 February 2010, XP050418466
- HUAWEI: "Increasing SRS capacity to support UL MIMO", 3GPP DRAFT; R1-094707, TSG RAN WG 1, Jeju, South Korea; 9-13 November 2009, XP050389107
- ZTE: "Multiplexing Capability of Uplink SRS in LTE-A", 3GPP DRAFT; R1-094743, TSG RAN WG 1; Jeju, South Korea; 9-13 November 2009, XP050389140
- RINNE M ET AL: "A Performance Summary of the Evolved 3G (E-UTRA) for Voice Over Internet and Best Effort Traffic", IEEE TRANSACTIONS ON VEHICULAR TECHNOLOGY, vol. 58, no. 7,1 September 2009, pages 3661-3673, XP011267387, NJ, US ISSN: 0018-9545
- NOKIA SIEMENS NETWORKS ETAL: "Channel sounding enhancements for LTE-Advanced", 3GPP DRAFT; R1-094653, TSG RAN WG1; Jeju, South Korea; 9-13 November 2009, XP050389058
- ERICSSON ET AL: "On sounding reference signal enhancements", 3GPP DRAFT; R1-100056, TSG RAN WG1, Valencia, Spain; 18-22 January 2010, XP050417803
- TEXAS INSTRUMENTS: "SRS for Carrier Aggregation in LTE-Advanced", 3GPP DRAFT; R1-100458, TSG RAN WG1, Valencia, Spain; 18-22 January 2010, XP050418100

### Summary of the Invention

The present invention therefore provides a method for handling sounding reference signal transmission enhancement to solve the abovementioned problems.

A method of handling a sounding reference signal (SRS) transmission for a mobile device is provided according to claim 1.

An alternative method is provided according to claim 2 and further detailed in claim 3.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of an exemplary wireless communication system according to the prior art.
FIG. 2 is a schematic diagram of an exemplary wireless communication system according to the present disclosure.
Fig. 3 is a schematic diagram of an exemplary communication device according to the present disclosure.
Fig. 4 is a flowchart of an exemplary process according to the present disclosure.
Fig. 5 is a flowchart of an exemplary process according to the present disclosure.
Fig. 6 is a flowchart of an exemplary process according to the present disclosure.

### Detailed Description

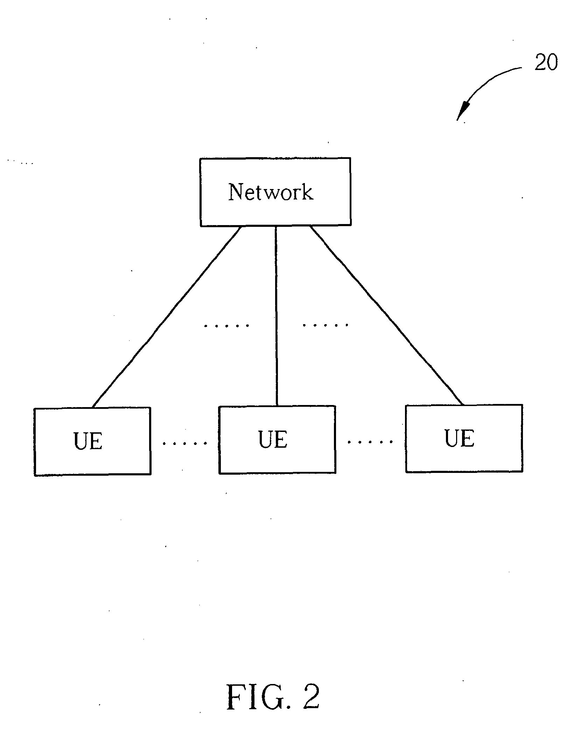

Please refer to Fig. 2, which is a schematic diagram of a wireless communication system 20 according to an example of the present disclosure. The wireless communication system 20, such as a long term evolution-advanced (LTE-A) system or other mobile communication systems supporting a carrier aggregation (CA), a coordinated multipoint transmission/reception (CoMP) and an uplink (UL) multiple-input multiple-output (MIMO), is briefly composed of a network and a plurality of user equipments (UEs). In Fig. 2, the network and the UEs are simply utilized for illustrating the structure of the wireless communication system 20. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

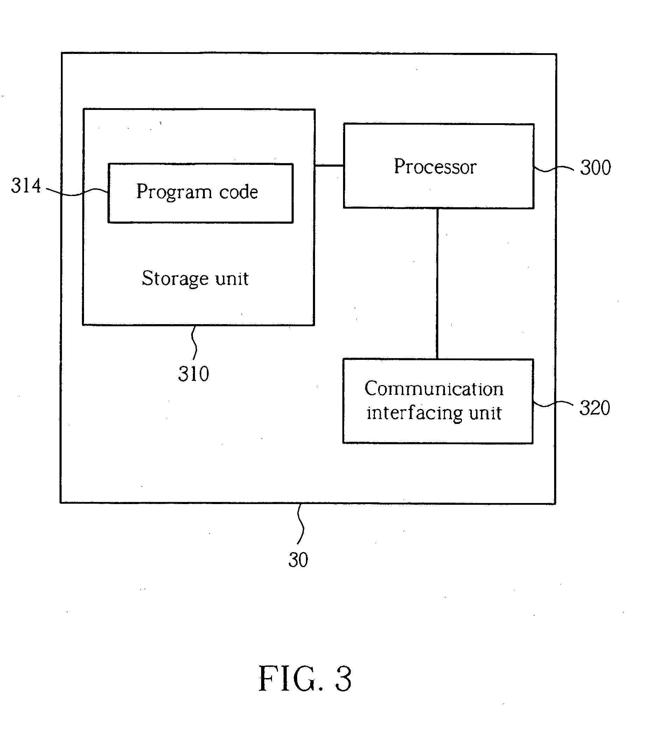

Please refer to Fig. 3, which is a schematic diagram of a communication device 30 according to an example of the present disclosure. The communication device 30 can be the UE or the network shown in Fig. 2, but is not limited herein. The communication device 30 may include a processor 300 such as a microprocessor or Application Specific Integrated Circuit (ASIC), a storage unit 310 and a communication interfacing unit 320. The storage unit 310 may be any data storage device that can store a program code 314, accessed by the processor 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a radio transceiver and can exchange wireless signals with the network according to processing results of the processor 300.

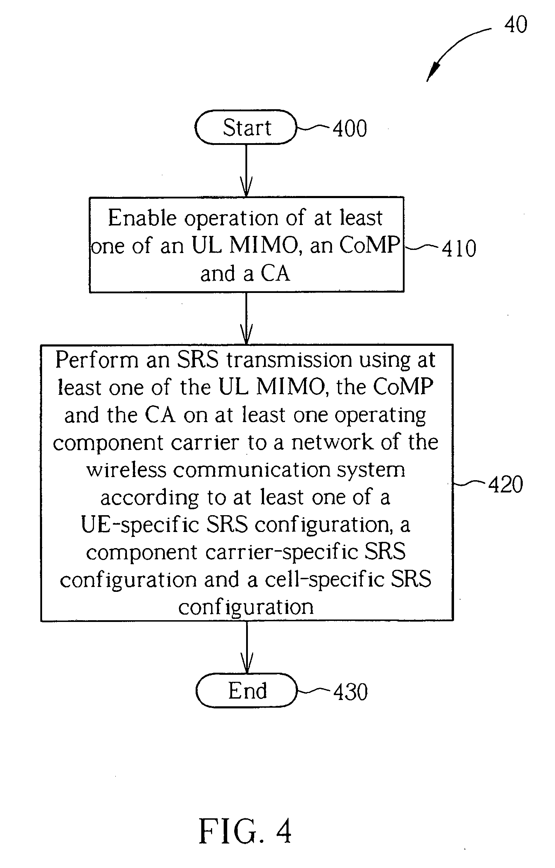

Please refer to Fig. 4, which is a flowchart of a process 40 according to an example of the present disclosure. The process 40 is utilized in a UE of the wireless communication system 20 shown in Fig. 2. The process 40 may be compiled into the program code 314 and includes the following steps:
Step 400: Start.
Step 410: Enable operation of at least one of an UL MIMO, an CoMP and a CA.
Step 420: Perform an SRS transmission using at least one of the UL MIMO, the CoMP, the CA, a single antenna and a single cell operation on at least one operating component carrier to a network of the wireless communication system according to at least one of a UE-specific SRS configuration, a component carrier-specific SRS configuration and a cell-specific SRS configuration.
Step 430: End.

According to the process 40, the network configures at least one of the UL MIMO (e.g. an UL MU-MIMO), the CoMP and the CA to the UE, and the UE uses at least one of the UE-specific SRS configuration, the component carrier-specific SRS configuration and the cell-specific SRS configuration for the SRS transmission on the at least one of operating component carrier. Particularly, the eNB may configure the UL MIMO of the UE to be transparent or non-transparent. In other words, the UE may be aware of that it is performing the SRS transmission using the UL MIMO, or eNBs near the UE simply combine SRSs transmitted by the UE to realize the UL MIMO, i.e., the UE is not aware of that it is performing the SRS transmission using the UL MIMO. Therefore, the UE can perform the SRS transmission on the at least one of operating component carrier according to the above illustration and the process 40, when the UE is configured with at least one of the UL MIMO, the CoMP and the CA.

If the UE is configured with a UE-specific CA configuration with a plurality of component carriers, the UE performs the SRS transmission on the plurality of component carriers according to at least one of the UE-specific SRS configuration, the component carrier-specific SRS configuration and the cell-specific SRS configuration. Further, parameters of the UE-specific SRS configuration may include at least one of an SRS subframe, an interleaved frequency-division multiple access (IFDMA) repetition factor, a duration, a number of aperiodic dynamic SRS configuration, a periodicity, a subframe offset, a system bandwidth, an SRS bandwidth, an SRS hopping bandwidth, a frequency domain position, a transmission comb, a spatial configuration, a time-domain multiplexing (TDM) configuration, an SRS sequence and a cyclic time shift.

Besides, the UE-specific SRS configuration may be included in at least one of a UE-specific signaling (e.g. a RRC signaling) and a cell-specific signaling (e.g. a cell broadcast signaling). In other words, part of the UE-specific SRS configuration is included in the UE-specific signaling, and the other part of the UE-specific SRS configuration is included in the cell-specific signaling. Also, the component carrier-specific SRS configuration may be included in at least one of the UE-specific signaling (e.g. the RRC signaling) and the cell-specific signaling (e.g. the cell broadcast signaling). In other words, part of the component carrier-specific SRS configuration is included in the UE-specific signaling, and the other part of the component carrier-specific SRS configuration is included in the cell-specific signaling. Particularly, the cell-specific signaling may include a UE-common configuration, i.e., the same for a plurality of UEs, and a carrier-common configuration, i.e., the same for a plurality of component carriers.

According to a certain purpose, e.g. cell planning, the eNB may configure the UE to perform the SRS transmission according to different conditions. For example, the UE perform the SRS transmission by using the same, partly the same or different SRS configurations for different transmission modes. Also, the UE may perform the SRS transmission by using the same, partly the same or different SRS configurations for different configurations of the UL MIMO, i.e., different configurations of antenna ports, different configurations of transmitting antennas, different transmission combs, different spatial configurations, different SRS sequences, different cyclic time shifts and/or different beams of a beamforming. Alternatively, the UE may perform the SRS transmission by using the same, partly the same or different SRS configurations for different configurations of CoMP, i.e., different active coordinating cells, different transmission combs, different TDM configurations, different SRS bandwidths, different SRS sequences, different cyclic time shifts and/or different CoMP schemes.

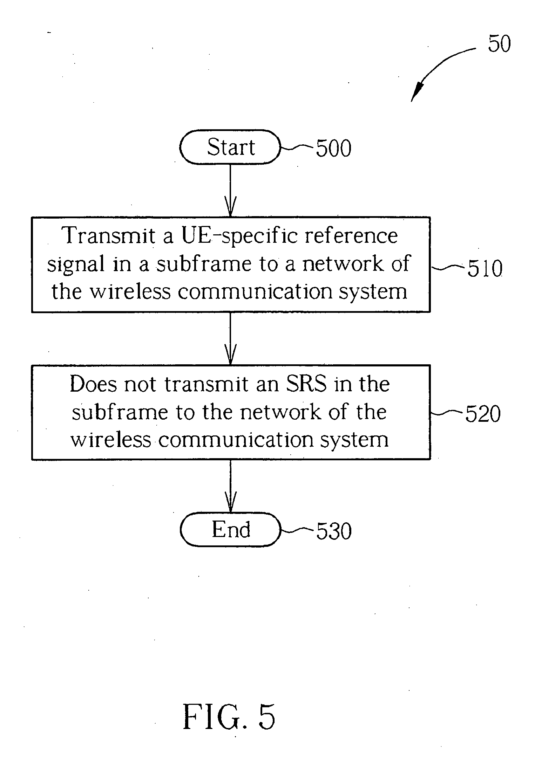

Please refer to Fig. 5, which is a flowchart of a process 50 according to an example of the present disclosure. The process 50 is utilized in a UE of the wireless communication system 20 shown in Fig. 2. The process 50 may be compiled into the program code 314 and includes the following steps:
Step 500: Start.
Step 510: Transmit a UE-specific reference signal in a subframe to a network of the wireless communication system.
Step 520: Does not transmit an SRS in the subframe to the network of the wireless communication system.
Step 530: End.

According to the process 50, when the UE transmit the UE-specific reference signal (e.g. a demodulation reference signal (DM RS)) in the subframe to the network, the UE decides not to transmit the SRS in the same subframe to the network. Particularly, the network may use the UE-specific reference signal to sound a channel between the UE and the network. Therefore, collision between the SRS and the UE-specific reference signal can be avoided according to the above illustration and the process 50. Moreover, the resource of the subframe is efficiently exploited since the demodulation reference signal is used to sound the channel between the UE and the network.

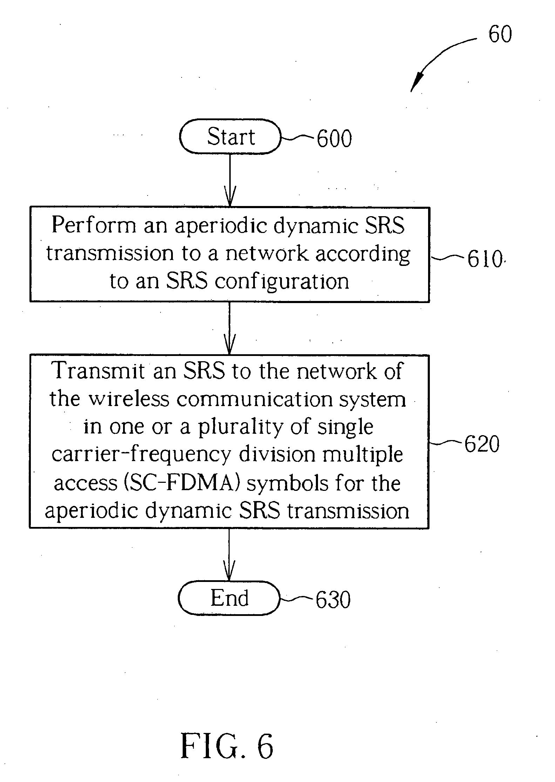

Please refer to Fig. 6, which is a flowchart of a process 60 according to an example of the present disclosure. The process 60 is utilized in a UE of the wireless communication system 20 shown in Fig. 2. The process 60 may be compiled into the program code 314 and includes the following steps:
Step 600: Start.
Step 610: Perform an aperiodic dynamic SRS transmission to a network according to an SRS configuration.
Step 620: Transmit an SRS to the network of the wireless communication system in one or a plurality of single carrier-frequency division multiple access (SC-FDMA) symbols for the aperiodic dynamic SRS transmission.
Step 630: End.

According to the process 60, the network configures the UE to perform the aperiodic dynamic SRS transmission according to the SRS configuration, where the UE can use the one or the plurality of SC-FDMA symbols for the aperiodic dynamic SRS transmission, i.e., the UE can transmit the SRS in the one or the plurality of SC-FDMA symbols according to the SRS configuration. The UE does not transmit a DM RS to the network, when the UE transmits the SRS to the network in at least one SC-FDMA symbol, wherein the at least one SC-FDMA symbol is configured for transmitting the DM RS. In this situation, the UE may transmit the SRS using cyclic time shifts configured for transmitting the DM RS. Besides, the UE may transmit the DM RS in a group of the at least one SC-FDMA symbol when the group of the at least one SC-FDMA symbol is not occupied by the SRS. Therefore, the UE can perform the aperiodic dynamic SRS transmission in the plurality of SC-FDMA symbols according to the above illustration and the process 60, when the UE is configured with the SRS configuration.

On the other hand, the UE may transmit both the SRS and the DM RS to the network in the at least one SC-FDMA symbol, wherein the UE transmits the SRS using the at least one cyclic time shift orthogonal to the one configured for transmitting the DM RS. Alternatively, the UE may transmit the DM RS to the network in the at least one SC-FDMA symbol, wherein the mobile device transmits the SRS using the at least one cyclic time shift different from the one configured for transmitting the DM RS. In other words, resources used for transmitting the SRS and the DM RS must be orthogonal or different to reduce mutual interference between the SRS and the DM RS. For example, the UE can transmit the SRS and the DM RS in different SC-FDMA symbols, i.e., using different resources. Alternatively, the UE can transmit the SRS and the DM RS in the same SC-FDMA symbol, i.e., using orthogonal resources.

Besides, the at least one cyclic time shift configured for transmitting the SRS and the DM RS is generated from a first RS base sequence configured for transmitting the SRS or a second RS base sequence configured for transmitting the DM RS. The length of the first RS base sequence and the length of the second RS base sequence are the same or different. The length of the at least one cyclic time shift generated from the first RS base sequence and the length of the at least one cyclic time shift generated from the second RS base sequence are the same or different. The first RS base sequence and the second RS base sequence are the same or different. The first RS base sequence and the second RS base sequence are generated from the same or different Zadoff-Chu sequences.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

In conclusion, the exemplary method and means are provided to enhance the SRS transmission for the UE in the LTE system in which the UE can only perform the SRS transmission without the UL MIMO, the CoMP and the CA, to operate in the wireless communication system (e.g. the LTE-A system) with the UL MIMO, the CoMP and the CA.

Those skilled in the art will readily observe that numerous modifications and alterations of the device and method may be made within the scope of the present invention as defined by the appended claims.

## Claims

1. A method of handling a sounding reference signal, SRS, for a mobile device (30) in a long term evolution advanced, LTE*-*A wireless communication system (20), the method comprising:
when transmitting a demodulation reference signal, DM RS, in a subframe to a network of the wireless communication system (510), not transmitting the SRS in the same subframe to the network of the wireless communication system (520), so that a collision between the SRS and the DM RS is avoided.

2. A method of handling a sounding reference signal, SRS, for a mobile device (30) in a long term evolution advanced, LTE*-*A, wireless communication system (20), the method comprising:
performing an aperiodic dynamic SRS transmission to a network according to an SRS configuration (610);
transmitting the SRS to the network of the wireless communication system in one or a plurality of single carrier-frequency division multiple access, SC-FDMA, symbols for the aperiodic dynamic SRS transmission (620); and
when transmitting the SRS to the network in one of at least one SC-FDMA symbol which is originally configured for transmitting a demodulation reference signal, DM RS, not transmitting the DM RS to the network in the same SC-FDMA symbol, so that a collision between the SRS and the DM RS is avoided.

3. The method of claim 2 further comprising:
transmitting both the SRS and the DM RS to the network in at least one SC-FDMA symbol, wherein the mobile device (30) transmits the SRS using at least one cyclic time shift orthogonal to the one configured for transmitting the DM RS; or
transmitting the DM RS to the network in a first group of the at least one SC-FDMA symbol, wherein the first group of the at least one SC-FDMA symbol is not used for transmitting the SRS, and transmitting both the SRS and the DM RS to the network in a second group of the at least one SC-FDMA symbol, wherein the mobile device (30) transmits the SRS using the at least one cyclic time shift orthogonal to the one configured for transmitting the DM RS; or
transmitting the DM RS to the network in the first group of the at least one SC-FDMA symbol, wherein the first group of the at least one SC-FDMA symbol is not used for transmitting the SRS, and transmitting the SRS to the network in the second group of the at least one SC-FDMA symbol, wherein the mobile device (30) transmits the SRS using the at least one cyclic time shift or base sequence different from the one configured for transmitting the DM RS.

## Patentansprüche

1. Ein Verfahren zum Handhaben von Sounding Reference Signals, SRS, für ein mobiles Endgerät (30) in einem Long Term Evolution Advanced, LTE-A, drahtlosen Kommunikationssystem (20), wobei das Verfahren folgende Schritte aufweist:
wenn ein Demodulationsreferenzsignal bzw. ein Demodulation Reference Signal, DM RS, in einem Unterrahmen zu einem Netzwerk des drahtlosen Kommunikationssystems (510) gesendet wird, nicht Senden des SRS zu dem Netzwerk des drahtlosen Kommunikationssystems (520) in demselben Unterrahmen, damit eine Kollision des SRS und des DM RS vermieden wird.

2. Ein Verfahren zum Handhaben von Sounding Reference Signals, SRS, für ein mobiles Endgerät (30) in einem Long Term Evolution Advanced, LTE-A, drahtlosen Kommunikationssystem (20), wobei das Verfahren folgende Schritte aufweist:
Ausführen einer aperiodischen dynamischen SRS Übertragung zu einem Netzwerk gemäß einer SRS Konfiguration (610);
Senden des SRS zu dem Netzwerk des drahtlosen Kommunikationssystems in einem oder einer Vielzahl von Single Carrier-Frequency Division Multiple Access, SC-FDMA, Symbolen für die aperiodische dynamische SRS Übertragung (620); und
wenn das SRS zu dem Netzwerk in einem von wenigstens einem SC-FDMA Symbol gesendet wird, das ursprünglich für die Übertragung eines Demodulationsreferenzsignals bzw. eines Demodulation Reference Signal, DM RS, konfiguriert wurde, nicht Senden des DM RS zu dem Netzwerk in demselben SC-FDMA Symbol, damit eine Kollision des SRS und des DM RS vermieden wird.

3. Das Verfahren nach Anspruch 2, wobei das Verfahren ferner folgende Schritte aufweist:
Senden sowohl des SRS als auch des DM RS zu dem Netzwerk in wenigstens einem SC-FDMA Symbol, wobei das mobile Endgerät (30) das SRS unter der Verwendung von wenigstens einer zyklischen Zeitverschiebung sendet, die orthogonal zu der ist, die für das Senden des DM RS konfiguriert wurde; oder
Senden des DM RS zu dem Netzwerk in einer ersten Gruppe des wenigstens einen SC-FDMA Symbols, wobei die erste Gruppe des wenigstens einen SC-FDMA Symbols nicht für das Senden des SRS verwendet wird, und Senden sowohl des SRS als auch des DM RS zu dem Netzwerk in einer zweiten Gruppe des wenigstens einen SC-FDMA Symbols, wobei das mobile Endgerät (30) das SRS unter der Verwendung der wenigstens einer zyklischen Zeitverschiebung sendet, die orthogonal zu der ist, die für das Senden des DM RS konfiguriert wurde; oder
Senden des DM RS zu dem Netzwerk in der ersten Gruppe des wenigstens einen SC-FDMA Symbols, wobei die erste Gruppe des wenigstens einen SC-FDMA Symbols nicht für das Senden des SRS verwendet wird, und Senden des SRS zu dem Netzwerk in der zweiten Gruppe des wenigstens einen SC-FDMA Symbols, wobei das mobile Endgerät (30) das SRS unter der Verwendung der wenigstens einer zyklischen Zeitverschiebung oder einer Basissequenz sendet, die unterschiedlich zu der ist, die für das Senden des DM RS konfiguriert wurde.

## Revendications

1. Procédé pour gérer un signal de référence de sondage, SRS, pour un dispositif mobile (30) dans un système de communication sans fil d'évolution à long terme avancé, LTE-A, (20), le procédé comprenant :
lors de l'émission d'un signal de référence de démodulation, DM RS, dans une sous-trame vers un réseau du système de communication sans fil (510), ne pas émettre le SRS dans la même sous-trame vers le réseau du système de communication sans fil (520), de sorte qu'une collision est évitée entre le SRS et le DM RS.

2. Procédé pour gérer un signal de référence de sondage, SRS, pour un dispositif mobile (30) dans un système de communication sans fil d'évolution à long terme avancé, LTE-A, (20), le procédé comprenant :
réaliser une émission de SRS dynamique apériodique vers un réseau conformément à une configuration de SRS (610) ;
émettre le SRS vers le réseau du système de communication sans fil dans un symbole ou une pluralité de symboles d'accès multiple par séparation fréquentielle à une seule porteuse, SC-FDMA, pour l'émission de SRS dynamique apériodique (620) ; et
lors de l'émission du SRS vers le réseau dans l'un d'au moins un symbole SC-FDMA qui est à l'origine configuré pour émettre un signal de référence de démodulation, DM RS, ne pas émettre le DM RS vers le réseau dans le même symbole SC-FDMA, de sorte qu'une collision est évitée entre le SRS et le DM RS.

3. Procédé selon la revendication 2, comprenant en outre :
émettre à la fois le SRS et le DM RS vers le réseau dans au moins un symbole SC-FDMA, le dispositif mobile (30) émettant le SRS en utilisant au moins un décalage temporel cyclique orthogonal à celui configuré pour émettre le DM RS ; ou
émettre le DM RS vers le réseau dans un premier groupe desdits au moins un symbole SC-FDMA, le premier groupe desdits au moins un symbole SC-FDMA n'étant pas utilisé pour émettre le SRS, et émettre à la fois le SRS et le DM RS vers le réseau dans un deuxième groupe desdits au moins un symbole SC-FDMA, le dispositif mobile (30) émettant le SRS en utilisant ledit au moins un décalage temporel cyclique orthogonal à celui configuré pour l'émission du DM RS ; ou
émettre le DM RS vers le réseau dans le premier groupe desdits au moins un symbole SC-FDMA, le premier groupe desdits au moins un symbole SC-FDMA n'étant pas utilisé pour émettre le SRS, et émettre le SRS vers le réseau dans le deuxième groupe desdits au moins un symbole SC-FDMA, le dispositif mobile (30) émettant le SRS en utilisant ledit au moins un décalage temporel cyclique ou une séquence de base, différents de ceux configurés pour l'émission du DM RS.
